# EUROPÄISCHE PATENTSCHRIFT

(11) **EP 3 235 038 B1**
(45) Veröffentlichungstag und Bekanntmachung des Hinweises auf die Patenterteilung: **04.09.2019**
(21) Anmeldenummer: 15781913.7
(22) Anmeldetag: 19.10.2015
(51) Int. Cl.: H01M 8/06, H01M 8/04

(54) **BRENNSTOFFZELLENVORRICHTUNG**
FUEL CELL DEVICE
DISPOSITIF DE PILE À COMBUSTIBLE

(30) Priorität: 16.12.2014 DE 102014226082
(43) Veröffentlichungstag der Anmeldung: 25.10.2017
(73) Patentinhaber: Robert Bosch GmbH, 70442 Stuttgart (DE)
(72) Erfinder: DOMASCHKE, Norbert, 71229 Leonberg (DE); CARRE, Maxime, 70469 Stuttgart (DE); MONTERROZA VELEZ, Kevin Emmanuel, Barranquilla 08001 (CO)
(86) Internationale Anmeldenummer: PCT/EP2015/074122
(87) Internationale Veröffentlichungsnummer: WO 2016/096197

(56) Entgegenhaltungen:
- US-A1- 2001 009 732
- US-A1- 2014 242 485

## Beschreibung

### Stand der Technik

Die Erfindung betrifft eine Brennstoffzellenvorrichtung nach dem Oberbegriff des Patentanspruchs 1.

Es ist bereits eine Brennstoffzellenvorrichtung mit einer integrierten Gasprozessoreinheit bekannt, welche eine Mehrzahl von Funktionseinheiten umfasst.

US 2014 242485 offenbart eine Brennstoffzellenvorrichtung mit einer integrierten Gasprozessoreinheit bei der fünf Funktionseinheiten koaxial angeordnet sind.

US 2008 081233 offenbart ebenfalls koaxial angeordnete Komponenten eines Brennstoffzellensystems.

### Offenbarung der Erfindung

Die Erfindung geht aus von einer Brennstoffzellenvorrichtung mit einer integrierten Gasprozessoreinheit, welche zumindest eine erste Funktionseinheit mit einer ersten Nennbetriebstemperatur, zumindest eine zweite Funktionseinheit mit einer zweiten Nennbetriebstemperatur, zumindest eine dritte Funktionseinheit mit einer dritten Nennbetriebstemperatur, zumindest eine vierte Funktionseinheit mit einer vierten Nennbetriebstemperatur und zumindest eine fünfte Funktionseinheit mit einer fünften Nennbetriebstemperatur aufweist.

Es wird vorgeschlagen, dass die Funktionseinheiten entlang zumindest einer Richtung betrachtet gemäß ihrer jeweiligen Nennbetriebstemperatur geordnet angeordnet sind.

Unter einer "Brennstoffzellenvorrichtung" soll insbesondere eine Vorrichtung verstanden werden, welche insbesondere einen, insbesondere funktionstüchtiger, Bestandteil, insbesondere eine Konstruktions- und/oder Funktionskomponente, eines Brennstoffzellensystems oder das gesamte Brennstoffzellensystem ausbildet. Unter einer "Gasprozessoreinheit" soll in diesem Zusammenhang insbesondere eine Einheit verstanden werden, welche dazu vorgesehen ist, ein insbesondere gasförmiges Fluid vor einer Zuleitung zu einer Anode und/oder zu einer Kathode einer Brennstoffzelleneinheit für eine Verwendung innerhalb einer in der Brennstoffzelleneinheit ablaufenden Reaktion und/oder zumindest ein Abgas der in der Brennstoffzelleneinheit ablaufenden Reaktion aufzubereiten und/oder nachzubereiten. Unter einer "Brennstoffzelleneinheit" soll in diesem Zusammenhang insbesondere eine Einheit mit zumindest einer Brennstoffzelle verstanden werden, welche dazu vorgesehen ist, zumindest eine chemische Energie zumindest eines, insbesondere kontinuierlich zugeführten, Brenngases, insbesondere Wasserstoff und/oder Kohlenstoffmonoxid, und zumindest eines Oxidationsmittels, insbesondere Sauerstoff, insbesondere in elektrische Energie umzuwandeln. Die zumindest eine Brennstoffzelle kann insbesondere als Festoxid-Brennstoffzelle (engl. Solid Oxide Fuel Cell, abgek. SOFC) ausgebildet sein. Vorzugsweise umfasst die zumindest eine Brennstoffzelleneinheit eine Vielzahl von Brennstoffzellen, welche insbesondere in einem Brennstoffzellenstack angeordnet sind. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Funktionseinheit" soll in diesem Zusammenhang insbesondere eine Teileinheit der Gasprozessoreinheit verstanden werden, welche insbesondere dazu vorgesehen ist, zumindest einen Beitrag zu einer Aufbereitung und/oder Vorbereitung des insbesondere gasförmigen Fluids und/oder des zumindest einen Abgases zu leisten. Die Gasprozessoreinheit umfasst insbesondere eine Mehrzahl, insbesondere zumindest drei, insbesondere verschieden voneinander und/oder identisch zueinander ausgebildeter, Funktionseinheiten. Insbesondere sind die Funktionseinheiten der Gasprozessoreinheit in ein gemeinsames Gehäuse der Gasprozessoreinheit integriert. Die Funktionseinheiten können jeweils insbesondere als eine Reformereinheit, als eine Nachbrenneinheit oder als ein Wärmeübertrager ausgebildet sein. Unter einer "Reformereinheit" soll in diesem Zusammenhang insbesondere eine chemischtechnische Einheit zu zumindest einer, insbesondere teilweisen oder vollständigen, Aufbereitung des Erdgases, insbesondere durch eine Dampfreformierung und/oder durch eine partielle Oxidation und/oder durch eine autotherme Reformierung, insbesondere zur Gewinnung zumindest eines Brenngases und/oder eines brenngashaltigen Gasgemischs, verstanden werden. Unter einer "Nachbrenneinheit" soll in diesem Zusammenhang insbesondere eine Einheit verstanden werden, welche dazu vorgesehen ist, zumindest einen brennbaren Bestandteil eines Abgases zumindest weitgehend nachzuverbrennen. Vorzugsweise ist die Nachbrenneinheit dazu vorgesehen, insbesondere innerhalb eines Anodenabgases einer Brennstoffzelleneinheit enthaltenes Brenngas zumindest weitgehend zu oxidieren. Insbesondere kann die Nachbrenneinheit einen katalytischen Nachbrenner und/oder einen Diffusionsbrenner und/oder einen Rekuperatorbrenner und/oder einen teil- und/oder vollvormischenden Brenner und/oder einen Porenbrenner umfassen. Unter einem "Wärmeübertrager" soll in diesem Zusammenhang insbesondere eine Einheit verstanden werden, welche dazu vorgesehen ist, Wärme in Richtung eines Temperaturgefälles zwischen zumindest zwei insbesondere fluiden Stoffströmen zu übertragen, insbesondere in einem Kreuzstrombetrieb und/oder vorzugsweise in einem Gegenstromprinzip. Als Wärmeübertrager ausgebildete Funktionseinheiten sind insbesondere dazu vorgesehen, Wärme von zumindest einem fluiden Stoffstrom, insbesondere einem Abgas, vorzugsweise einem Anodenabgas einer Brennstoffzelleneinheit, insbesondere auf ein Erdgas und/oder ein Brenngas und/oder ein brenngashaltiges Gasgemisch, welches in zumindest einem Betriebszustand einer Anode der Brennstoffzelleneinheit zugeführt wird, zu übertragen und/oder eine Wärme von zumindest einem fluiden Stoffstrom, insbesondere einem Abgas und/oder einem Abgasgemisch der Brennstoffzelleneinheit, auf eine Umgebungsluft, welche in zumindest einem Betriebszustand einer Kathode der Brennstoffzelleneinheit zugeführt ist, zu übertragen. Vorzugsweise sind die als Wärmeübertrager ausgebildeten Einheiten jeweils als Koaxialwärmeübertrager ausgebildet.

Insbesondere ist zumindest ein Teil der Funktionseinheiten Teil eines Anodengasprozessors. Insbesondere umfasst der Anodenprozessor zumindest eine als eine Reformereinheit ausgebildete Funktionseinheit und zumindest eine als eine Wärmeübertrager ausgebildete Funktionseinheit. Vorzugsweise umfasst der Anodengasprozessor zwei jeweils als ein Wärmeübertrager ausgebildete Funktionseinheiten. Unter einem "Anodengasprozessor" soll insbesondere eine Einheit verstanden werden, welche dazu vorgesehen ist, insbesondere ein Erdgas und/oder ein Brenngas und/oder ein brenngashaltiges Gasgemisch auf eine Reaktionstemperatur zu erwärmen und/oder das Erdgas in ein Brenngas und/oder ein Brenngasgemisch zu überführen. Alternativ oder zusätzlich kann der Anodengasprozessor dazu vorgesehen sein, zumindest einen Teil einer Umgebungsluft vor einer Zuführung an eine Kathode einer Brennstoffzelleneinheit auf eine Reaktionstemperatur zu erwärmen. Unter einem "Erdgas" soll in diesem Zusammenhang insbesondere ein Gas und/oder ein Gasgemisch, insbesondere ein Naturgasgemisch, verstanden werden, welches zumindest ein Alkan, insbesondere Methan, Ethan, Propan und/oder Butan, umfasst. Ferner kann das Erdgas weitere Bestandteile aufweisen, wie insbesondere Kohlenstoffdioxid und/oder Stickstoff und/oder Sauerstoff und/oder Schwefelverbindungen. Insbesondere ist ein weiterer Teil der Funktionseinheiten als ein Kathodengasprozessor ausgebildet. Insbesondere ist zumindest ein weiterer Teil der Funktionseinheiten Teil eines Kathodengasprozessors. Unter einem "Kathodengasprozessor" soll insbesondere eine Einheit verstanden werden, welche dazu vorgesehen ist, insbesondere eine Umgebungsluft vor einer Zuführung an eine Kathode einer Brennstoffzelleneinheit auf eine Reaktionstemperatur zu erwärmen und/oder ein Anodenabgas der Brennstoffzelleneinheit nachzubereiten. Alternativ oder zusätzlich kann der Kathodengasprozessor dazu vorgesehen sein, zumindest einen Teil eines Erdgases und/oder eines Brenngases und/oder eines brenngashaltiges Gasgemischs auf eine Reaktionstemperatur zu erwärmen. Insbesondere umfasst der Kathodengasprozessor zumindest eine als eine Nachbrenneinheit ausgebildete Funktionseinheit und zumindest eine als ein Wärmeübertrager ausgebildete Funktionseinheit. Unter einer "Nennbetriebstemperatur einer Funktionseinheit" soll in diesem Zusammenhang insbesondere eine insbesondere durchschnittliche Prozesstemperatur verstanden werden, welche die jeweilige Funktionseinheit während eines insbesondere eingeschwungenen Betriebs aufweist.

Darunter, dass die Funktionseinheiten "entlang zumindest einer Richtung betrachtet gemäß ihrer jeweiligen Nennbetriebstemperatur geordnet angeordnet sind" soll in diesem Zusammenhang insbesondere verstanden werden, dass insbesondere ausgehend von einer Funktionseinheit mit einer höchsten Nenntemperatur oder mit einer niedrigsten Nenntemperatur entlang einer Richtung betrachtet die weitere Funktionseinheiten mit steigender Nennbetriebstemperatur oder fallender Nennbetriebstemperatur angeordnet sind.

Durch die erfindungsgemäße Ausgestaltung kann eine gattungsgemäße Brennstoffzellenvorrichtung mit vorteilhaften Betriebseigenschaften bereitgestellt werden. Insbesondere können Wärmeverluste, insbesondere innerhalb der Gasprozessoreinheit, vorteilhaft minimiert werden. Des Weiteren können insbesondere thermo-mechanische Spannungen innerhalb der Funktionseinheiten vorteilhaft verringert werden, wodurch eine Lebensdauer vorteilhaft erhöht werden kann. Ferner kann eine vorteilhaft hohe Integrationsdichte von Komponenten in der Gasprozessoreinheit erreicht werden, wodurch insbesondere ein Bauraum vorteilhaft reduziert werden kann.

Des Weiteren wird vorgeschlagen, dass die Funktionseinheit mit der höchsten Nennbetriebstemperatur zentral innerhalb der Gasprozessoreinheit angeordnet ist. Darunter, dass die Funktionseinheit mit der höchsten Nennbetriebstemperatur "zentral innerhalb der Gasprozessoreinheit angeordnet ist" soll insbesondere verstanden werden, dass eine Mittelachse der Gasprozessoreinheit zumindest im Wesentlichen einer Mittelachse der Funktionseinheit mit der höchsten Nennbetriebstemperatur entspricht. Unter "zumindest im Wesentlichen" soll in diesem Zusammenhang insbesondere verstanden werden, dass eine Abweichung von einem vorgegebenen Wert insbesondere weniger als 10%, vorzugsweise weniger als 5% und besonders bevorzugt weniger als 2,5% des vorgegebenen Werts abweicht. Vorzugsweise ist die Funktionseinheit mit der höchsten Nennbetriebstemperatur als eine Nachbrenneinheit ausgebildet. Hierdurch können Wärmeverluste vorteilhaft weiter reduziert werden.

In einer Ausgestaltung der Erfindung wird vorgeschlagen, dass zumindest ein Teil der Funktionseinheiten zumindest abschnittsweise, schalenförmig um die Funktionseinheit mit der höchsten Nennbetriebstemperatur angeordnet ist. Darunter, dass zumindest ein Teil der Funktionseinheiten "schalenförmig um die Funktionseinheit mit der höchsten Nennbetriebstemperatur angeordnet ist" soll in diesem Zusammenhang insbesondere verstanden werden, dass der zumindest eine Teil der Funktionseinheiten derart um die Funktionseinheit mit der höchsten Nennbetriebstemperatur angeordnet ist, dass die Nennbetriebstemperaturen der die Funktionseinheit mit der höchsten Nennbetriebstemperatur umgebenden Funktionseinheiten mit zunehmendem insbesondere radialen Abstand von der die Funktionseinheit mit der höchsten Nennbetriebstemperatur abnehmen. Hierdurch kann eine Integrationsdichte der Gasprozessoreinheit vorteilhaft weiter gesteigert werden und ein Bauraum vorteilhaft weiter reduziert werden.

In einer weiteren Ausgestaltung der Erfindung wird vorgeschlagen, dass zumindest ein Teil der Funktionseinheiten axial nebeneinander angeordnet ist. Darunter, dass zumindest ein Teil der Funktionseinheiten "axial nebeneinander angeordnet" ist, soll insbesondere verstanden werden, dass der zumindest eine Teil der Funktionseinheiten insbesondere zumindest im Wesentlichen den gleichen radialen Abstand zu einer Mittelachse der Funktionseinheit mit der höchsten Nennbetriebstemperatur aufweisen undentlang einer zumindest im Wesentlichen parallel zu der Mittelachse verlaufenden Geraden versetzt zueinander angeordnet sind. Hierdurch können Funktionseinheiten vorteilhaft bezüglich einer Temperaturverteilung innerhalb der Funktionseinheit mit der höchsten Nennbetriebstemperatur angeordnet werden.

Ferner wird vorgeschlagen, dass die Brennstoffzellenvorrichtung zumindest eine Brennstoffzelleneinheit umfasst, welche zumindest teilweise in die Gasprozessoreinheit integriert ist. Insbesondere ist die Brennstoffzelleneinheit zumindest teilweise und vorzugsweise vollständig in ein Gehäuse der Gasprozessoreinheit integriert. Insbesondere ist die Brennstoffzelleneinheit derart in die Gasprozessoreinheit intergiert, dass eine Mittelachse der Brennstoffzelleneinheit zumindest im Wesentlichen einer Mittelachse der Gasprozessoreinheit und/oder der Funktionseinheit mit der höchsten Nennbetriebstemperatur entspricht. Vorzugsweise umschließt zumindest ein Teil der Funktionseinheiten zumindest abschnittsweise die Brennstoffzelleneinheit. Hierdurch kann eine vorteilhaft kompakte Bauweise der Brennstoffzellenvorrichtung erreicht werden. Ferner kann die Brennstoffzelleneinheit vorteilhaft insbesondere thermisch in die Gasprozessoreinheit eingebunden werden.

Ist die Gasprozessoreinheit zumindest im Wesentlichen zylinderförmig ausgebildet, kann eine vorteilhaft symmetrische Temperaturausbreitung innerhalb der Gasprozessoreinheit erreicht werden. Vorzugsweise weist die Gasprozessoreinheit eine zumindest im Wesentlichen kreisförmige Grundfläche auf. Alternativ ist es jedoch ebenso denkbar, dass die Gasprozessoreinheit eine von einer kreisform abweichende Grundfläche aufweist. Insbesondere kann die Gasprozessoreinheit eine einfache regelmäßig polygonale Grundfläche aufweisen.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine vereinfachte Prinzipskizze einer Brennstoffzellenvorrichtung mit einer Gasprozessoreinheit, welche fünf Funktionseinheiten umfasst,
- Fig. 2: eine vereinfachte Prinzipskizze einer Anordnung der Funktionseinheiten innerhalb der Gasprozessoreinheit in einer seitlichen Ansicht und in einer Draufsicht,
- Fig. 3 - 5: vereinfachte Prinzipskizzen alternativer, nicht erfindungsgemässer Anordnungen von Funktionseinheiten innerhalb von Gasprozessoreinheiten jeweils in einer seitlichen Ansicht und in einer Draufsicht und
- Fig. 6 - 10: vereinfachte Prinzipskizzen alternativer, nicht erfindungsgemässer Anordnungen von Funktionseinheiten innerhalb von Gasprozessoreinheiten mit integrierter Brennstoffzelleneinheit jeweils in einer seitlichen Ansicht und in einer Draufsicht.

### Beschreibung des Ausführungsbeispiels

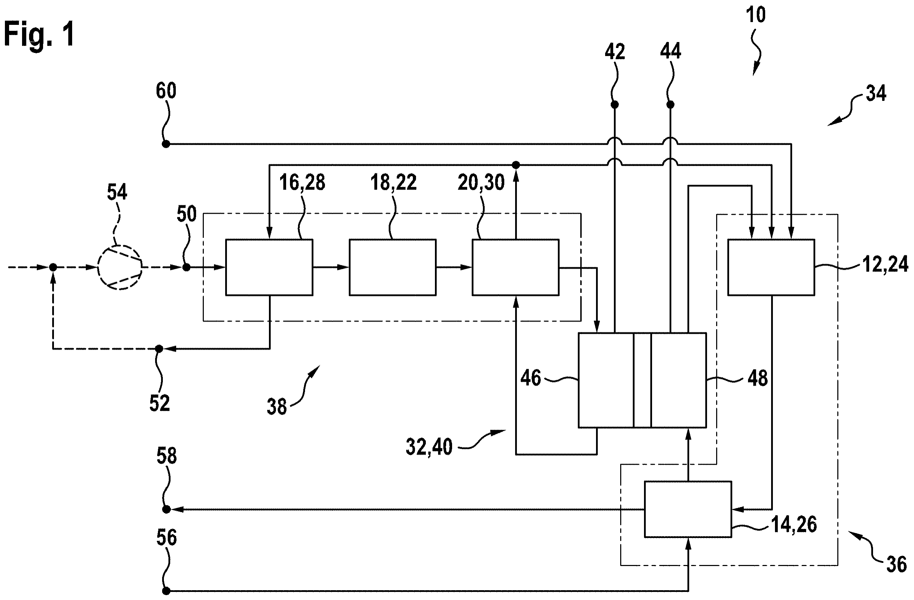

Figur 1 zeigt in einer vereinfachten Prinzipskizze ein Flussdiagramm einer Brennstoffzellenvorrichtung 34. Die Brennstoffzellenvorrichtung 34 umfasst eine Gasprozessoreinheit 10 mit fünf Funktionseinheiten 12, 14, 16, 18, 20, wobei ein Teil der Funktionseinheiten 12, 14 einen Kathodengasprozessor 36 ausbildet und ein weiterer Teil der Funktionseinheiten 16, 18, 20 einen Anodengasprozessor 38 ausbildet. Die Funktionseinheiten 12, 14, 16, 18, 20 weisen jeweils eine spezifische Nennbetriebstemperatur auf.

Der Kathodengasprozessor 36 umfasst eine als Nachbrenneinheit 24 ausgebildete erste Funktionseinheit 12 und einen als Wärmeübertrager 26 ausgebildete zweite Funktionseinheit 14. Der Anodengasprozessor 38 umfasst eine dritte Funktionseinheit 16 und eine fünfte Funktionseinheit 20, welche jeweils als ein Wärmeübertrager 28, 30 ausgebildet sind. Ferner umfasst der Anodengasprozessor 38 eine als Reformereinheit 22 ausgebildete vierte Funktionseinheit 18, welche zwischen die dritte Funktionseinheit 16 und die fünfte Funktionseinheit 20 geschaltet ist. Die als Nachbrenneinheit 24 ausgebildete erste Funktionseinheit 12 weist gegenüber den übrigen Funktionseinheit 14, 16, 18, 20 die höchste Nennbetriebstemperatur auf.

Ferner weist die Brennstoffzellenvorrichtung 34 eine Brennstoffzelleneinheit 32 auf. Die Brennstoffzelleneinheit 32 ist hier vereinfacht als eine Brennstoffzelle 40 zur Erzeugung elektrischer und thermischer Energie dargestellt. Die elektrische Energie ist über zwei Gleichstromleitungen 42, 44 abgreifbar. Alternativ ist jedoch auch eine Ausbildung einer Brennstoffzelleneinheit als ein Brennstoffzellenstack mit einer Vielzahl von Brennstoffzellen denkbar. Die Brennstoffzelle 40 ist vorzugsweise als Festoxid-Brennstoffzelle ausgeführt. Die Brennstoffzelle 40 weist eine Anode 46 und eine Kathode 48 auf.

Über einen Prozessanschluss 50 wird der Brennstoffzellenvorrichtung 34 ein Frischgas zugeführt. Das Frischgas besteht aus frischem Erdgas und einem Rezirkulat, welches über einen weiteren Prozessanschluss 52 aus der Brennstoffzellenvorrichtung 34 abgeführt wird. Das Erdgas und das Rezirkulat werden außerhalb der Brennstoffzellenvorrichtung 34 zusammengeführt und mittels eines Verdichters 54 verdichtet.

Das Frischgas wird in der dritten Funktionseinheit 16 durch ein Anodenabgas der Brennstoffzelleneinheit 32 vorgewärmt. Zu einer Entschwefelung des Erdgases kann der dritten Funktionseinheit 16 eine hier nicht dargestellte Entschwefelungseinheit, insbesondere eine Heißentschwefelungseinheit, vorgeschaltet sein. Im Anschluss wird es durch die vierte Funktionseinheit 18 hindurch in die fünfte Funktionseinheit 20 geleitet, in dem es auf eine Reaktionstemperatur zwischen 650 °C und 850 °C erhitzt wird. Die vierte Funktionseinheit 18 dient zu einer endothermen Dampf-Reformierung der im Erdgas vorhandenen langkettigen Alkane (CₓH₂₍ₓ₊₁₎, mit x > 1):

CₓH₂₍ₓ₊₁₎ + x ∗ H₂O → x ∗ CO + (2x+1) ∗ H₂

Das durch vierte Funktionseinheit 18 gewonnene brenngashaltige Reformat wird der Anode 46 der Brennstoffzelleneinheit 32 zugeführt, wo es durch eine elektrochemische Reaktion unter Erzeugung von elektrischer und thermischer Energie umgesetzt wird. Ein heißes Anodenabgas der Brennstoffzelleneinheit 32 wird in die fünfte Funktionseinheit 20 geleitet, um das Frischgas auf die Reaktionstemperatur zu erhitzen. Da das Frischgas nicht vollständig in der Anode 46 der Brennstoffzelleneinheit 32 umsetzbar ist, wird ein Teil des Anodenabgases, wie bereits beschrieben, dem frischen Erdgas als Rezirkulat zugeführt. Der Rest des Anodenabgases wird direkt der ersten Funktionseinheit 12 zugeführt. In der ersten Funktionseinheit 12 werden brennbare Bestandteile des Anodenabgases nachverbrannt. Die in der ersten Funktionseinheit 12 entstehende Wärme wird verwendet, um eine der Brennstoffzellenvorrichtung 34 über einen Prozessanschluss 56 zugeführte Umgebungsluft für die Kathode 48 zu erhitzen und um beispielsweise Heizungswasser nach einem weiteren Prozessanschluss 58 zu erwärmen (hier nicht dargestellt).

Für die elektrochemische Reaktion in der Kathode 48 wird die Umgebungsluft in der zweiten Funktionseinheit 14 auf die Reaktionstemperatur erhitzt. Nach dem Austritt aus der Brennstoffzelleneinheit 32 wird ein Kathodenabgas direkt in die erste Funktionseinheit 12 geleitet. Zusätzlich zu einem Teil des Anodenabgases kann der ersten Funktionseinheit 12 Erdgas über eine Rohrleitung 60 zugeführt werden. Dies kann vor allem bei einem Aufheizvorgang der Brennstoffzellenvorrichtung 34 notwendig sein.

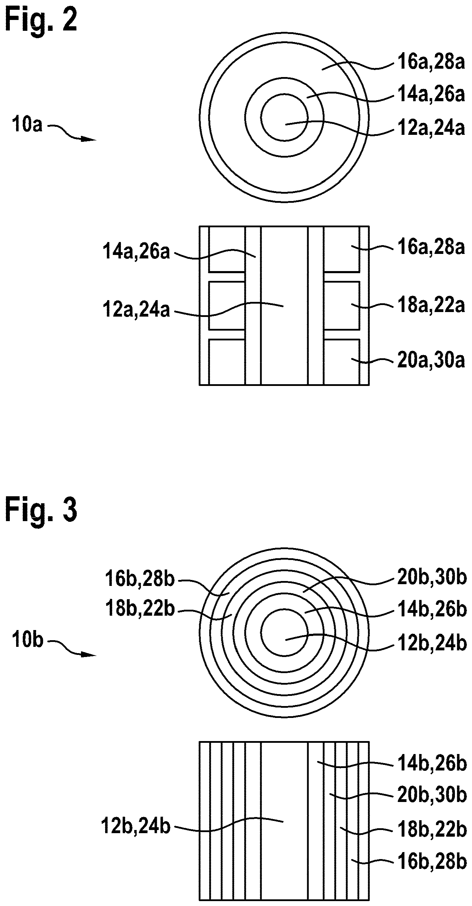

Figur 2 zeigt in einer stark vereinfachten Prinzipskizze eine Anordnung der Funktionseinheiten 12a, 14a, 16a, 18a, 20a innerhalb der Gasprozessoreinheit 10a in einer seitlichen Ansicht und in einer Draufsicht. Die Gasprozessoreinheit 10a ist zylinderförmig ausgebildet. Alternativ kann eine Gasprozessoreinheit auch eine von einer Zylinderform abweichende Außenkontur aufweisen. Die Funktionseinheiten 12a, 14a, 16a, 18a, 20a sind innerhalb der Gasprozessoreinheit 10a gemäß ihrer jeweiligen Nennbetriebstemperatur angeordnet. Die als Nachbrenneinheit 24a ausgebildete erste Funktionseinheit 12a mit der höchsten Nennbetriebstemperatur ist zentral innerhalb der Gasprozessoreinheit 10a angeordnet. Die erste Funktionseinheit 12a ist in Umfangsrichtung vollständig von der zweiten Funktionseinheit 14a umschlossen. Die dritte Funktionseinheit 16a, die vierte Funktionseinheit 18a und die fünfte Funktionseinheit 20a umschließen jeweils die erste Funktionseinheit 12a und die zweite Funktionseinheit 14a in Umfangsrichtung. Dabei sind die dritte Funktionseinheit 16a, die vierte Funktionseinheit 18a und die fünfte Funktionseinheit 20a axial nebeneinander angeordnet.

Bei der dargestellten Anordnung der Funktionseinheiten 12a, 14a, 16a, 18a, 20a strömt heißes Gas innerhalb der ersten Funktionseinheit 12a von unten nach oben. Dabei nimmt eine Gastemperatur innerhalb der ersten Funktionseinheit 12a mit zunehmender Höhe ab. In einem horizontalen Querschnitt stellt sich eine rotationssymmetrische Temperaturverteilung innerhalb der ersten Funktionseinheit 12a und der zweiten Funktionseinheit 14a ein. Ein Temperaturniveau einer Außenwand der zweiten Funktionseinheit 14a sinkt mit zunehmender Höhe. Da die Nennbetriebstemperaturen der dritten Funktionseinheit 16a, der vierten Funktionseinheit 18a und er fünften Funktionseinheit 20a der Reihe nach steigen, sind diese um die zweite Funktionseinheit 14a untereinander angeordnet. Die fünfte Funktionseinheit 20a weist gegenüber der dritten Funktionseinheit 16a und der vierten Funktionseinheit 18a die höchste Nennbetriebstemperatur auf und ist dementsprechend unten angeordnet. Die dritte Funktionseinheit 16a weist gegenüber der vierten Funktionseinheit 18a und der fünften Funktionseinheit 20a die niedrigste Nennbetriebstemperatur auf und ist dementsprechend oben angeordnet. Die vierte Funktionseinheit 18a ist zwischen der dritten Funktionseinheit 16a und der fünften Funktionseinheit 20a angeordnet.

In den Figuren 3 bis 10 sind acht weitere nicht erfindungsgemässe Ausführungsbeispiele gezeigt.

Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figur 2, verwiesen werden kann. Zur Unterscheidung der Ausführungsbeispiele ist der Buchstabe a den Bezugszeichen des Ausführungsbeispiels in der Figur 2 nachgestellt. In den Ausführungsbeispielen der Figuren 3 bis 10 ist der Buchstabe a durch die Buchstaben b bis i ersetzt.

Figur 3 zeigt in einer stark vereinfachten Prinzipskizze eine alternative Anordnung von Funktionseinheiten 12b, 14b, 16b, 18b, 20b innerhalb einer Gasprozessoreinheit 10b in einer seitlichen Ansicht und in einer Draufsicht. Die Gasprozessoreinheit 10b ist zylinderförmig ausgebildet. Alternativ kann eine Gasprozessoreinheit auch eine von einer Zylinderform abweichende Außenkontur aufweisen. Die Funktionseinheiten 12b, 14b, 16b, 18b, 20b sind innerhalb der Gasprozessoreinheit gemäß ihrer jeweiligen Nennbetriebstemperatur angeordnet. Die als Nachbrenneinheit 24b ausgebildete erste Funktionseinheit 12b mit der höchsten Nennbetriebstemperatur ist zentral innerhalb der Gasprozessoreinheit 10b angeordnet. Die weiteren Funktionseinheiten 14b, 16b, 18b, 20b sind schalenförmig mit abnehmender Nennbetriebstemperatur von innen nach außen um die erste Funktionseinheit 12b angeordnet.

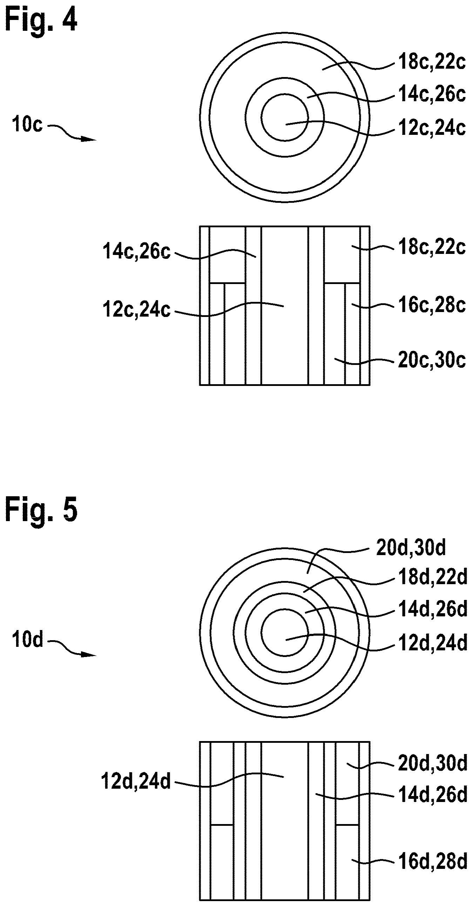

Figur 4 zeigt in einer stark vereinfachten Prinzipskizze eine weitere alternative Anordnung von Funktionseinheiten 12c, 14c, 16c, 18c, 20c innerhalb einer Gasprozessoreinheit 10c in einer seitlichen Ansicht und in einer Draufsicht. Die Gasprozessoreinheit 10c ist zylinderförmig ausgebildet. Alternativ kann eine Gasprozessoreinheit auch eine von einer Zylinderform abweichende Außenkontur aufweisen. Die Funktionseinheiten 12c, 14c, 16c, 18c, 20c sind innerhalb der Gasprozessoreinheit 10c gemäß ihrer jeweiligen Nennbetriebstemperatur angeordnet. Die als Nachbrenneinheit 24c ausgebildete erste Funktionseinheit 12c mit der höchsten Nennbetriebstemperatur ist zentral innerhalb der Gasprozessoreinheit 10c angeordnet. Die erste Funktionseinheit 12c ist in Umfangsrichtung vollständig von der zweiten Funktionseinheit 14c umschlossen. Die dritte Funktionseinheit 16c und die fünfte Funktionseinheit 20c umschließen die erste Funktionseinheit 12c und die zweite Funktionseinheit 14c schalenförmig. Die vierte Funktionseinheit 18c ist axial neben der dritten Funktionseinheit 16c und der fünften Funktionseinheit 20c angeordnet.

Figur 5 zeigt in einer stark vereinfachten Prinzipskizze eine weitere alternative Anordnung von Funktionseinheiten 12d, 14d, 16d, 18d, 20d innerhalb einer Gasprozessoreinheit 10d in einer seitlichen Ansicht und in einer Draufsicht. Die Gasprozessoreinheit 10d ist zylinderförmig ausgebildet. Alternativ kann eine Gasprozessoreinheit auch eine von einer Zylinderform abweichende Außenkontur aufweisen. Die Funktionseinheiten 12d, 14d, 16d, 18d, 20d sind innerhalb der Gasprozessoreinheit 10d gemäß ihrer jeweiligen Nennbetriebstemperatur angeordnet. Die als Nachbrenneinheit 24d ausgebildete erste Funktionseinheit 12d mit der höchsten Nennbetriebstemperatur ist zentral innerhalb der Gasprozessoreinheit 10d angeordnet. Die zweite Funktionseinheit 14d und die vierte Funktionseinheit 18d ist um die erste Funktionseinheit 12d angeordnet. Die dritte Funktionseinheit 16d und die fünfte Funktionseinheit 20d sind axial nebeneinander angeordnet und umschließen jeweils abschnittsweise die erste Funktionseinheit 12d und die zweite Funktionseinheit 14d.

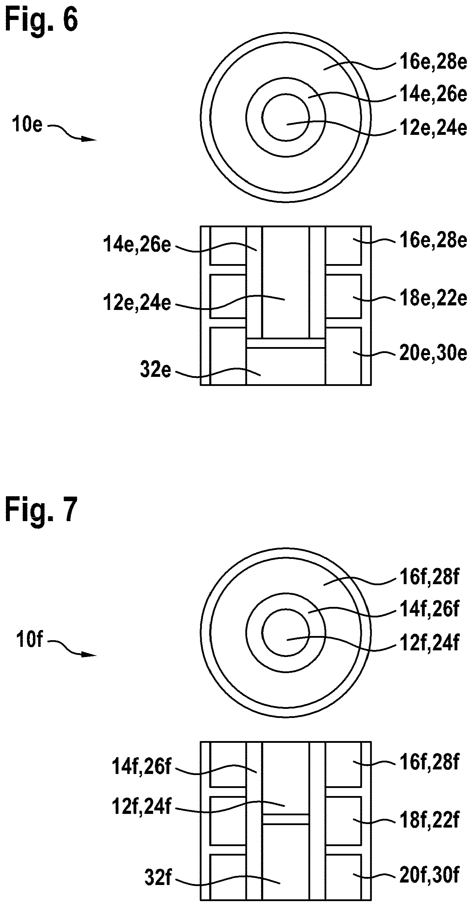

Figur 6 zeigt in einer stark vereinfachten Prinzipskizze einer Gasprozessoreinheit 10e in welche neben Funktionseinheiten 12e, 14e, 16e, 18e, 20e ferner eine Brennstoffzelleneinheit 32e in die Gasprozessoreinheit 10e integriert ist. Die Anordnung der Funktionseinheiten 12e, 14e, 16e, 18e, 20e entspricht der in der Figur 2 gezeigten Anordnung. Die Brennstoffzelleneinheit 32e ist zentral unterhalb der ersten Funktionseinheit 12e angeordnet. Die Brennstoffzelleneinheit 32e ist in Umfangsrichtung vollständig von der fünften Funktionseinheit 20e umschlossen.

Figur 7 zeigt in einer stark vereinfachten Prinzipskizze einer alternative Gasprozessoreinheit 10f in welche neben Funktionseinheiten 12f, 14f, 16f, 18f, 20f ferner eine Brennstoffzelleneinheit 32f in die Gasprozessoreinheit 10f integriert ist. Die Anordnung der Funktionseinheiten 12f, 14f, 16f, 18f, 20f entspricht der in der Figur 2 gezeigten Anordnung. Die Brennstoffzelleneinheit 32f ist zentral unterhalb der ersten Funktionseinheit 12f angeordnet. Die Brennstoffzelleneinheit 32f ist in Umfangsrichtung vollständig von der zweiten Funktionseinheit 14f umschlossen.

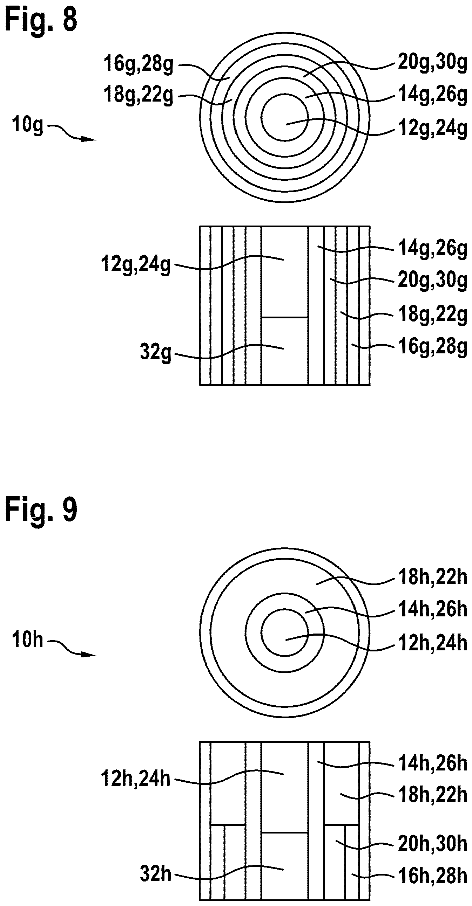

Figur 8 zeigt in einer stark vereinfachten Prinzipskizze einer weiteren alternativen Gasprozessoreinheit 10g in welche neben Funktionseinheiten 12g, 14g, 16g, 18g, 20g ferner eine Brennstoffzelleneinheit 32g in die Gasprozessoreinheit 10g integriert ist. Die Anordnung der Funktionseinheiten 12g, 14g, 16g, 18g, 20g entspricht der in der Figur 3 gezeigten Anordnung. Die Brennstoffzelleneinheit 32g ist zentral unterhalb der ersten Funktionseinheit 12g angeordnet. Die weiteren Funktionseinheiten 14g, 16g, 18g, 20g sind schalenförmig mit abnehmender Nennbetriebstemperatur von innen nach außen um die erste Funktionseinheit 12g und die Brennstoffzelleneinheit 32g angeordnet.

Figur 9 zeigt in einer stark vereinfachten Prinzipskizze einer weiteren alternativen Gasprozessoreinheit 10h in welche neben Funktionseinheiten 12h, 14h, 16h, 18h, 20h ferner eine Brennstoffzelleneinheit 32h in die Gasprozessoreinheit 10h integriert ist. Die Anordnung der Funktionseinheiten 12h, 14h, 16h, 18h, 20h entspricht der in der Figur 4 gezeigten Anordnung. Die Brennstoffzelleneinheit 32h ist zentral unterhalb der ersten Funktionseinheit 12h angeordnet. Die Brennstoffzelleneinheit 32h ist in Umfangsrichtung vollständig von der zweiten Funktionseinheit 14h umschlossen.

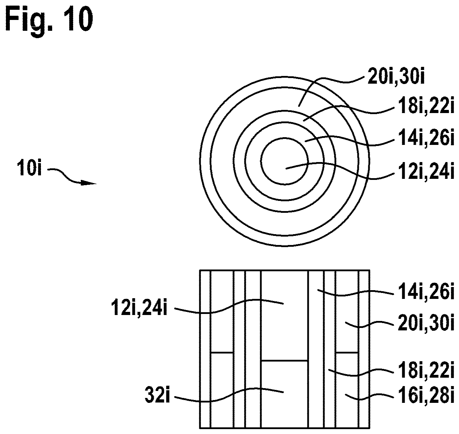

Figur 10 zeigt in einer stark vereinfachten Prinzipskizze einer weiteren alternativen Gasprozessoreinheit 10i in welche neben Funktionseinheiten 12i, 14i, 16i, 18i, 20i ferner eine Brennstoffzelleneinheit 32i in die Gasprozessoreinheit 10i integriert ist. Die Anordnung der Funktionseinheiten 12i, 14i, 16i, 18i, 20i entspricht der in der Figur 5 gezeigten Anordnung. Die Brennstoffzelleneinheit 32i ist zentral unterhalb der ersten Funktionseinheit 12i angeordnet. Die Brennstoffzelleneinheit 32i ist in Umfangsrichtung vollständig von der zweiten Funktionseinheit 14i umschlossen.

## Patentansprüche

1. Brennstoffzellenvorrichtung mit einer integrierten Gasprozessoreinheit (10a; 10e; 10f), welche zumindest eine erste Funktionseinheit (12a; 12e; 12f) mit einer ersten Nennbetriebstemperatur, zumindest eine zweite Funktionseinheit (14a; 14e; 14f) mit einer zweiten Nennbetriebstemperatur, zumindest eine dritte Funktionseinheit (16a; 16e; 16f) mit einer dritten Nennbetriebstemperatur, zumindest eine vierte Funktionseinheit (18a; 18e; 18f), welche eine vierte Nennbetriebstemperatur aufweist und zumindest eine fünfte Funktionseinheit (20a; 20e; 20f), welche eine fünfte Nennbetriebstemperatur aufweist, aufweist, wobei die Funktionseinheiten (12a, 14a, 16a, 18a, 20a; 12e, 14e, 16e, 18e, 20e; 12f, 14f, 16f, 18f, 20f) jeweils als eine Reformereinheit (22a; 22e; 22f), als eine Nachbrenneinheit (24a; 24e; 24f) oder als ein Wärmeübertrager (26a, 28a, 30a; 26e, 28e, 30e; 26f, 28f, 30f) ausgebildet sind und entlang zumindest einer Richtung betrachtet gemäß ihrer jeweiligen Nennbetriebstemperatur geordnet angeordnet sind, wobei die als Nachbrenneinheit (24a; 24e; 24f) ausgebildete erste Funktionseinheit (12a; 12e; 12f) mit der höchsten Nennbetriebstemperatur zentral innerhalb der Gasprozessoreinheit (10a; 10e; 10f) angeordnet ist und die erste Funktionseinheit (12a; 12e; 12f) in Umfangsrichtung vollständig von der zweiten Funktionseinheit (14a; 14e; 14f) umschlossen ist, **dadurch gekennzeichnet, dass** die dritte Funktionseinheit (16a; 16e; 16f) die vierte Funktionseinheit (18a; 18e; 18f) und die fünfte Funktionseinheit (20a; 20e; 20f) jeweils die erste Funktionseinheit (12a; 12e; 12f) und die zweite Funktionseinheit (14a; 14e; 14f) in Umfangsrichtung umschließen, wobei die dritte Funktionseinheit (16a; 16e; 16f), die vierte Funktionseinheit (18a; 18e; 18f) und die fünfte Funktionseinheit (20a; 20e; 20f) axial nebeneinander angeordnet sind.

2. Brennstoffzellenvorrichtung nach einem der vorhergehenden Ansprüche, **dadurch gekennzeichnet, dass** die Funktionseinheit (12a-i) mit der höchsten Nennbetriebstemperatur zentral innerhalb der Gasprozessoreinheit (10a-i) angeordnet ist.

3. Brennstoffzellenvorrichtung nach Anspruch 1, **dadurch gekennzeichnet, dass** die Funktionseinheit (12a-i) mit der höchsten Nennbetriebstemperatur als eine Nachbrenneinheit (24a-i) ausgebildet ist.

4. Brennstoffzellenvorrichtung nach einem der vorhergehenden Ansprüche, **dadurch gekennzeichnet, dass** zumindest ein Teil der Funktionseinheiten (14b-d, 16b-d, 18b-d; 20b-d; 14g-h, 16g-h, 16-h, 16g-h) zumindest abschnittsweise schalenförmig um die Funktionseinheit (12b-d; 12g-h) mit der höchsten Nennbetriebstemperatur angeordnet ist.

5. Brennstoffzellenvorrichtung nach einem der vorhergehenden Ansprüche, **gekennzeichnet durch** zumindest eine Brennstoffzelleneinheit (32e-i), welche zumindest teilweise in die Gasprozessoreinheit (10e-i) integriert ist.

6. Brennstoffzellenvorrichtung nach Anspruch 1, **dadurch gekennzeichnet, dass** zumindest ein Teil der Funktionseinheiten (14e-i, 16e-i, 18e-i, 20e-i) zumindest abschnittsweise schalenförmig um die Brennstoffzelleneinheit (32e-i) angeordnet sind.

7. Brennstoffzellenvorrichtung nach einem der vorhergehenden Ansprüche, **dadurch gekennzeichnet, dass** die Gasprozessoreinheit (10e-i) zumindest im Wesentlichen zylinderförmig ausgebildet ist.

## Claims

1. Fuel cell device with an integrated gas processor unit (10a; 10e; 10f), which has at least one first functional unit (12a; 12e; 12f) with a first nominal operating temperature, at least one second functional unit (14a; 14e; 14f) with a second nominal operating temperature, at least one third functional unit (16a; 16e; 16f) with a third nominal operating temperature, at least one fourth functional unit (18a; 18e; 18f), which has a fourth nominal operating temperature, and at least one fifth functional unit (20a; 20e; 20f), which has a fifth nominal operating temperature, wherein the functional units (12a, 14a, 16a, 18a, 20a; 12e, 14e, 16e, 18e, 20e; 12f, 14f, 16f, 18f, 20f) are respectively formed as a reformer unit (22a; 22e; 22f), as an afterburning unit (24a; 24e; 24f) or as a heat exchanger (26a, 28a, 30a; 26e, 28e, 30e; 26f, 28f, 30f) and, when viewed along at least one direction, are arranged in order of their respective nominal operating temperature, wherein the first functional unit (12a; 12e; 12f) with the highest nominal operating temperature, formed as an afterburning unit (24a; 24e; 24f), is arranged centrally within the gas processor unit (10a; 10e; 10f) and the first functional unit (12a; 12e; 12f) is completely enclosed in the circumferential direction by the second functional unit (14a; 14e; 14f), **characterized in that** the third functional unit (16a; 16e; 16f) encloses the fourth functional unit (18a; 18e; 18f) and the fifth functional unit (20a; 20e; 20f) respectively encloses the first functional unit (12a; 12e; 12f) and the second functional unit (14a; 14e; 14f) in the circumferential direction, wherein the third functional unit (16a; 16e; 16f), the fourth functional unit (18a; 18e; 18f) and the fifth functional unit (20a; 20e; 20f) are arranged axially alongside one another.

2. Fuel cell device according to one of the preceding claims, **characterized in that** the functional unit (12a-i) with the highest nominal operating temperature is arranged centrally within the gas processor unit (10a-i).

3. Fuel cell device according to Claim 1, **characterized in that** the functional unit (12a-i) with the highest nominal operating temperature is formed as an afterburning unit (24a-i).

4. Fuel cell device according to one of the preceding claims, **characterized in that** at least some of the functional units (14b-d, 16b-d, 18b-d, 20b-d; 14g-h, 16g-h, 16-h, 16g-h) are arranged at least in certain portions in the form of a shell around the functional unit (12b-d; 12g-h) with the highest nominal operating temperature.

5. Fuel cell device according to one of the preceding claims, **characterized by** at least one fuel cell unit (32e-i), which is at least partially integrated in the gas processor unit (10e-i).

6. Fuel cell device according to Claim 1, **characterized in that** at least some of the functional units (14e-i, 16e-i, 18e-i, 20e-i) are arranged at least in certain portions in the form of a shell around the fuel cell unit (32e-i).

7. Fuel cell device according to one of the preceding claims, **characterized in that** the gas processor unit (10e-i) is formed at least substantially in a cylindrical manner.

## Revendications

1. Dispositif de pile à combustible comprenant une unité de processeur de gaz (10a ; 10e ; 10f) qui possède au moins une première unité fonctionnelle (12a ; 12e ; 12f) ayant une première température de fonctionnement nominale, au moins une deuxième unité fonctionnelle (14a ; 14e ; 14f) ayant une deuxième température de fonctionnement nominale, au moins une troisième unité fonctionnelle (16a ; 16e ; 16f) ayant une troisième température de fonctionnement nominale, au moins une quatrième unité fonctionnelle (18a ; 18e ; 18f), laquelle possède une quatrième température de fonctionnement nominale, et au moins une cinquième unité fonctionnelle" (20a ; 20e ; 20f), laquelle possède une cinquième. température de fonctionnement nominale, les unités fonctionnelles (12a, 14a, 16a, 18a, 20a ; 12e, 14e, 16e, 18e, 20e ; 12f, 14f, 16f, 18f, 20f) étant respectivement réalisées sous la forme d'une unité de reformeur (22a ; 22e ; 22f), d'une unité de postcombustion (24a ; 24e ; 24f) ou d'un transmetteur de chaleur (26a, 28a, 30a ; 26e, 28e, 30e ; 26f, 28f, 30f) et, vues le long d'au moins une direction, étant disposées ordonnées en fonction de leur température de fonctionnement nominale respective, la première unité fonctionnelle (12a ; 12e ; 12f), réalisée sous la forme d'une unité de postcombustion (24a ; 24e ; 24f) et ayant la température de fonctionnement nominale la plus élevée, étant disposée au centre à l'intérieur de l'unité de processeur de gaz (10a ; 10e ; 10f) et la première unité fonctionnelle (12a ; 12e ; 12f) étant entièrement entourée par la deuxième unité fonctionnelle (14a ; 14e ; 14f) dans la direction circonférentielle, **caractérisé en ce que** la troisième unité fonctionnelle (16a ; 16e ; 16f), la quatrième unité fonctionnelle (18a ; 18e ; 18f) et la cinquième unité fonctionnelle (20a ; 20e ; 20f) entourent respectivement la première unité fonctionnelle (12a ; 12e ; 12f) et la deuxième unité fonctionnelle (14a ; 14e ; 14f) dans la direction circonférentielle, la troisième unité fonctionnelle (16a ; 16e ; 16f), la quatrième unité fonctionnelle (18a ; 18e ; 18f) et la cinquième unité fonctionnelle (20a ; 20e ; 20f) étant disposées l'une à côté de l'autre dans le sens axial.

2. Dispositif de pile à combustible selon l'une des revendications précédentes, **caractérisé en ce que** l'unité fonctionnelle (12a-i) ayant la température de fonctionnement nominale la plus élevée est disposée au centre à l'intérieur de l'unité de processeur de gaz (10a-i).

3. Dispositif de pile à combustible selon la revendication 1, **caractérisé en ce que** l'unité fonctionnelle (12a-i) ayant la température de fonctionnement nominale la plus élevée est réalisée sous la forme d'une unité de postcombustion (24a-i).

4. Dispositif de pile à combustible selon l'une des revendications précédentes, **caractérisé en ce qu'**au moins une partie des unités fonctionnelles (14b-d, 16b-d, 18bd ; 20b-d ; 14g-h, 16g-h, 16-h, 16g-h') sont disposées, au moins dans certaines portions, en forme de coque autour de l'unité fonctionnelle (12b-d ; 12g-h) ayant la température de fonctionnement nominale la plus élevée.

5. Dispositif de pile à combustible selon l'une des revendications précédentes, **caractérisé par** au moins une unité de pile à combustible (32e-i) qui est intégrée au moins partiellement dans l'unité de processeur de gaz (10e-i) .

6. Dispositif de pile à combustible selon la revendication 1, **caractérisé en ce qu'**au moins une partie des unités fonctionnelles (14e-i, 16e-i, 18e-i, 20e-i) sont disposées, au moins dans certaines portions, en forme de coque autour de l'unité de pile à combustible (32e-i).

7. Dispositif de pile à combustible selon l'une des revendications précédentes, **caractérisé en ce que** l'unité de processeur de gaz (10e-i) est au moins sensiblement de configuration cylindrique.
